Europäisches Patentamt

(19) European Patent Office

Office européen des brevets

(11) Publication number: **0 330 306 B1**

(12) **EUROPEAN PATENT SPECIFICATION**

(45) Date of publication of patent specification:
10.07.91 Bulletin 91/28

(51) Int. Cl.⁵: **B60R 21/16**

(21) Application number: **89300557.9**

(22) Date of filing: **20.01.89**

(54) Horn blowing switch arrangement.

(30) Priority: **16.02.88 US 155973**

(43) Date of publication of application:
**30.08.89 Bulletin 89/35**

(45) Publication of the grant of the patent:
**10.07.91 Bulletin 91/28**

(84) Designated Contracting States:
**DE FR GB**

(56) References cited:
**FR-A- 2 202 483**
**FR-A- 2 449 004**

(73) Proprietor: **GENERAL MOTORS CORPORATION**
**General Motors Building 3044 West Grand Boulevard**
**Detroit Michigan 48202 (US)**

(72) Inventor: **Fosnaugh, Harland Ralph**
**205 Sycamore Creek Drive**
**Springboro Ohio 45066 (US)**
Inventor: **Winters, Mark Thomas**
**1096 Cambridge Sta.Road**
**Centerville Ohio 45458 (US)**

(74) Representative: **Denton, Michael John et al**
**Patent Section Vauxhall Motors Limited 1st Floor Gideon House 26 Chapel Street**
**Luton Bedfordshire LU1 2SE (GB)**

## Description

This invention relates to a horn blowing switch arranged in a vehicle steering wheel defined by the features of the first part of claim 1 which are known from FR-A-2 449 004.

Horn blowing switch arrangements for steering wheels having inflatable occupant restraint modules are also known from US-A-3 819 205 and US-A-4 325 568. In both of these arrangements, the horn blowing switches are mounted on the inflatable occupant restraint module and are manually depressible by the driver when the driver desires to blow the vehicle horn.

It is also known to provide a horn blowing switch arrangement between the inflatable occupant restraint module and the hub portion of the vehicle steering wheel. In such arrangement, the inflatable occupant restraint module and support brackets underlying opposite sides of the inflatable occupant restraint module are slidably secured to cantilevered steel springs mounted to the hub portion of the vehicle steering wheel by headed bolts extending through the steel springs and threaded into the inflatable occupant restraint module. Compression springs seat between the hub portion of the vehicle steering wheel and the support brackets to locate the bolt heads in engagement with the cantilevered springs. A contact on each support bracket is engageable with a plate in the hub portion of the vehicle steering wheel to complete a circuit across a source of power and the vehicle horn when one side of the inflatable occupant restraint module is depressed toward the hub portion of the vehicle steering wheel.

A horn blowing switch arrangement according to the present invention is characterised by the features specified in the characterising portion of Claim 1.

The arrangement of this invention includes a switch module which is mounted between the inflatable occupant restraint module and the hub portion of the vehicle steering wheel and which mounts the inflatable occupant restraint module to the vehicle steering wheel. The switch module to blow the horn is actuated when the inflatable occupant restraint module is manually depressed. The arrangement of this invention has several features which provide for ease of assembly as well as ease of access for repair when necessary.

In the preferred embodiment of the invention, the inflatable occupant restraint module is supported at the corners thereof by a number of self contained switches which are part of a switch module mounted to the hub portion of the vehicle steering wheel. The inflatable occupant restraint module is of conventional type and includes a base plate which mounts the inflator and the cushion, a container for the cushion, and an outer covering over the container. The switch module mounts the inflatable occupant restraint module to the vehicle steering wheel in covering relationship thereto after the switch module has been mounted within the hub portion of the vehicle steering wheel. Thus the vehicle steering wheel and switch module can be mounted to the steering column during the normal assembly process of the vehicle and the inflatable occupant restraint module can then be later mounted to the vehicle steering wheel.

The primary feature of this invention is that it provides an improved horn blowing switch arrangement for vehicle steering wheels having inflatable occupant restraint modules. Another feature is that the horn blowing switch arrangement includes a switch module which supports the inflatable occupant restraint module within the hub portion of the vehicle steering wheel at a plurality of mounting points so that the inflatable occupant restraint module cannot slide or move laterally of itself when depressed to blow the vehicle horn. A further feature is that the switch module is a self-contained unit which can be mounted to the vehicle steering wheel prior to assembly of the vehicle steering wheel to the steering column. Yet another feature is that the inflatable occupant restraint module can be easily assembled to and disassembled from the switch module.

The present invention will now be described, by way of example, with reference to the following description and the accompanying drawings, in which :

Figure 1 is a plan view of a vehicle steering wheel having an inflatable occupant restraint module and a horn blowing switch arrangement according to this invention ;

Figure 2 is an enlarged sectional view taken generally along line 2-2 of Figure 1 ;

Figure 3 is an enlarged view of a portion of Figure 2 ;

Figure 4 is a view taken along line 4-4 of Figure 3 ;

Figure 5 is an enlarged view taken along line 5-5 of Figure 1 ; and

Figure 6 is a view taken along line 6-6 of Figure 5.

Referring now to the drawings, a vehicle steering wheel designated generally 10 includes an (outer, generally circular) rim portion 12 and a hub portion 14 which is generally rectangular in shape and provided with a base wall 16 and a side wall 18. The hub portion 14 is joined to the rim portion 12 by spoke portions 20 which have base walls 22 continuing the base wall 16 of the hub portion 14 and side walls 24 continuing the side walls 18 of the hub portion. Base and side walls 22 and 24 terminate at the rim portion 12.

The base wall 16 of hub portion 14 is apertured at 26, Figure 5, and receives an insert 28 which is conventionally fixed thereto. This insert 28 is provided with a tapered splined bore 30 which receives a complementary shaped upper end 32 of the steering shaft 34 when the vehicle steering wheel 10 is mounted to the steering column, not shown, as will be further described.

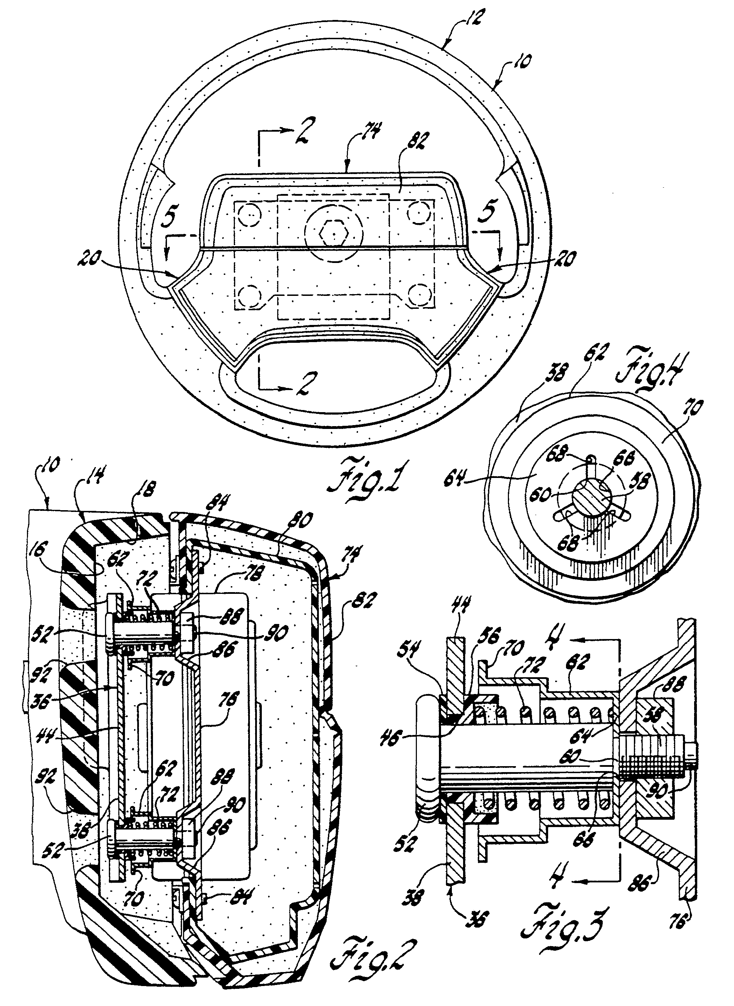

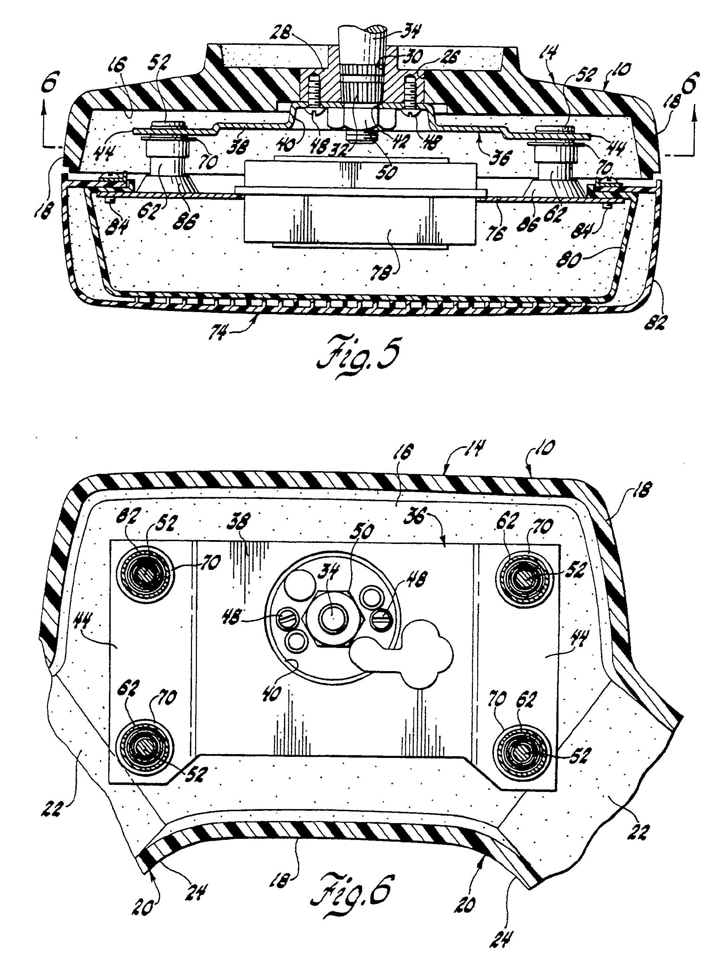

The horn blowing switch arrangement designated generally 36 includes a support plate 38 which is generally rectangular in shape, Figure 6, and includes a circular depression 40 which is centrally apertured at 42, Figure 5. The support plate 38 has end portions 44 which are offset upwardly from the normal plane of the support plate and each of which is apertured at the corners thereof at 46, Figure 3. The base wall of the circular depression 40 seats on the insert 28 and is secured thereto by bolts 48, Figures 5 and 6. Further, a nut 50 which secures the vehicle steering wheel 10 to the threaded end of steering shaft 34 als clamps the circular depression 40 to insert 28.

As best shown in Figure 3, a headed bolt 52 (which defines a post member) extends upwardly through each of the apertures 46 at the corners of support plate 38. A flat insulating washer 54 and an offset flanged insulating washer 56 define insulating means which insulate the head and the shank of bolt 52 from support plate 38. The bolt 52 includes a threaded end 58 which is joined to the shank of the bolt by a radial groove 60. A (cylindrically stepped) sleeve member 62 (contact member) of metal includes a base wall 64, Figure 4, provided with an aperture 66 and a series of slots 68 extending radially of the aperture 66 so that the base wall 64 intermediate the slots 68 is deflectable. This permits the sleeve member 62 to be threaded over the threaded end 58 of bolt 52 until it snaps into radial groove 60 so that the sleeve member 62 is thereafter axially fixed and freely rotatable relative to the bolt. Radial groove 60 and aperture 66 define fixing means. The lower stepped portion or skirt portion of the sleeve member 62 includes a radial terminal flange 70 which is spaced from support plate 38 by a coil compression spring 72 (resilient means) seated between a radial flange of offset flanged insulating washer 56 and the base wall 64 of the sleeve member 62.

The support plate 38, bolts 52, the insulating washers 54 and 56, the sleeve members 62 and the coil compression springs 72 are assembled to each other to provide a switch module which can be mounted to the insert 28 of the vehicle steering wheel 10 by bolts 48 prior to the vehicle steering wheel being mounted to the steering shaft 34.

An inflatable occupant restraint module 74 covers the openings of the hub portion 14 and spoke portions 20 defined by side walls 18 and 24. The inflatable occupant restraint module 74 is conventional and generally includes a base plate 76 which mounts an inflator 78 and a cushion, not shown. The base plate 76, the inflator 78 and the cushion are encapsulated in a container 80. An outer soft cover 82 encapsulates the container 80, with the flanges of the outer soft cover 82 and container 80 being bolted at 84 to the base plate 76 to assemble the inflatable occupant restraint module 74. The base plate 76 includes four tapered truncated embossments 86, each of which is apertured to receive the threaded end 58 of a bolt 52 therethrough. A nut 88 is welded or otherwise secured to the base wall of each embossment in alignment with the aperture therethrough.

After the switch module has been mounted to the vehicle steering wheel 10 and the vehicle steering wheel mounted to the steering shaft 34, as previously described, the inflatable occupant restraint module 74 is then fitted over the openings of the hub and spoke portions 14, 20 with pilot portions 90 of bolts 52 within nuts 88. A screwdriver or other tool matching a recess in the head of bolt 52 is then inserted through each opening 92 in the base wall 16 of the hub portion 14 to rotate each bolt 52 and thread the bolts into nuts 88. This mounts the inflatable occupant restraint module 74 to the vehicle steering wheel 10. The switch module and inflatable occupant restraint module 74 provide the horn blowing switch arrangement 36. Each opening 92 is in alignment with a bolt 52. Threaded end 58 and nut 88 define securing means.

If the driver desires to blow the vehicle horn, the driver presses the inflatable occupant restraint module 74 downwardly within the vehicle steering wheel 10. This closes at least two of the radial terminal flanges 70 of two of the sleeve members 62 against support plate 38 to complete a circuit across a source of power, the vehicle horn(s), support plate 38 and bolts 52. The bolts 52 slide relative to insulating washers 54 and 56 as the inflatable occupant restraint module 74 moves within the vehicle steering wheel 10. Since the inflatable occupant restraint module 74 is supported at the corners thereof, it is not possible for the inflatable occupant restraint module to move laterally relative to the vehicle steering wheel 10 as it is pressed within the vehicle steering wheel. Any one side of the inflatable occupant restraint module 74 or the entire inflatable occupant restraint module 74 can be pressed downwardly by the driver to blow the vehicle horn. Thus, the multiple point mounting of the inflatable occupant restraint module 74 provides for a smooth horn blowing movement of the inflatable occupant restraint module, without binding and attendant wear.

If at any time removal of the inflatable occupant restraint module 74 is desired or access to the switch module is desired, the bolts 52 can be threaded out of nuts 88 to permit removal of the inflatable occupant restraint module 74 and access to the switch module. Futher, if removal of the switch module is desired, bolts 48 and nut 50 can thereafter be removed to permit removal of the switch module without requiring disassembly of the vehicle steering wheel 10 from the steering column.

Thus this invention provides an improved horn blowing switch arrangement for vehicle steering wheels having inflatable occupant restraint modules.

## Claims

1. A horn blowing switch arrangement (36) arranged in a vehicle steering wheel (10) including a hub portion (14) and a rim portion (12), and an inflatable occupant restraint module (74), a switch module including a support (38) secured to the hub portion (14) of the vehicle steering wheel (10), the support including a plurality of spaced apertures (46) therethrough, a post member (52) slidable in each aperture (46) of the support (38), securing means (58, 88) securing the inflatable occupant restraint module (74) to the post members (52) for movement therewith as a unit relative to the support (38), resilient means (72) operative between the support (38) and the inflatable occupant restraint module (74) to bias the inflatable occupant restraint module (74) away from the support (38), means limiting movement of the inflatable occupant restraint module (74) away from the support (38) to locate the inflatable occupant restraint module (74) a predetermined distance from the support (38) under the bias of the resilient means (72), the horn blowing switch arrangement being characterised by a contact member (62) respective to each post member (52) and extending from the inflatable occupant restraint module. (74) toward the support (38) less than the predetermined distance, insulating means (54, 56) insulating the contact members (62) from the support (38), and a source of power connected across the contact members (62) and the support (38), manual engagement of the inflatable occupant restraint module (74) by the driver with sufficient force to overcome the bias of the resilient means (72) moving the inflatable occupant restraint module (74) toward the support (38) to engage the contact members (62) with the support (38) and complete a circuit across the source of power as the post members (52) slide relative to the support (38).

2. A horn blowing switch arrangement as claimed in Claim 1, wherein the support (38) is multi-cornered with the spaced apertures (46) at each corner thereof.

3. A horn blowing switch arrangement as claimed in Claim 1 or Claim 2, wherein the contact member (62) and its respective post member (52) are in contact with one another, and the insulating means (54, 56) insulates the post member (52) from the support (38).

4. A horn blowing switch arrangement as claimed in Claim 3, wherein the contact members comprise sleeve members (62) which surround each post member (52).

5. A horn blowing switch arrangement as claimed in Claim 4, comprising fixing means (60, 66) fixing one end of each sleeve member (62) to a respective post member (52).

6. A horn blowing switch arrangement as claimed in any one of Claims 1 to 5, wherein each post member (52) has a head, the head acting as the means limiting movement.

7. A horn blowing switch arrangement as claimed in Claim 6, wherein the head of each post member (52) aligns with corresponding openings (92) through the hub portion (14).

## Ansprüche

1. Hupentasteranordnung (36), die in einem Fahrzeuglenkrad (10) angeordnet ist, mit einem Nabenabschnitt (14) und einem Randabschnitt (12), einem aufblasbaren Insassen-Rückhaltemodul (74), einem Schaltermodul einschließlich einer an dem Nabenabschnitt (14) des Fahrzeuglenkrades (10) befestigten Stütze (38), wobei die Stütze eine Vielzahl mit Abstand angebrachter Durchbrüche (46) enthält, in jedem Durchbruch (46) der Stütze (38) ein gleitbares Pfostenglied (52), Befestigungsmittel (58, 88), die den aufblasbaren Insassen-Rückhaltemodul (74) an den Pfostengliedern (52) zur Bewegung mit diesen als eine Einheit relativ zu der Stütze (38) befestigen, elastische Mittel (72), die zwischen der Stütze (38) und dem aufblasbaren Insassen-Rückhaltemodul (74) betreibbar sind, um den aufblasbaren Insassen-Rückhaltemodul (74) von der Stütze (38) weg vorzuspannen, die Bewegung des aufblasbaren Insassen-Rückhaltemoduls (74) von der Stütze (38) weg begrenzende Mittel, um den aufblasbaren Insassen-Rückhaltemodul (74) mit einem vorbestimmten Abstand von der Stütze (38) unter Vorspannung des elastischen Mittels (72) zu lokalisieren, wobei die Hupentastenanordnung gekennzeichnet ist durch ein Kontaktglied (62) bezüglich jedes Pfostengliedes (52), das sich von dem aufblasbaren Insassen-Rückhaltemodul (74) um weniger als den vorbestimmten Abstand zu der Stütze (38) hin erstreckt, Isolationsmittel (54, 56), welche die Kontaktglieder (62) gegen die Stütze (38) isolieren, und eine Leistungsquelle, die über die Kontaktglieder (62) und die Stütze (38) angeschlossen ist, wobei Handeingriff an dem aufblasbaren Insassen-Rückhaltemodul (74) durch den Fahrer mit zur Überwindung der Vorspannung des elastischen Mittels (72) ausreichender Kraft den aufblasbaren Insassen-Rückhaltemodul (74) zu der Stütze hin bewegt zur Anlage der Kontaktglieder (62) an der Stütze (38) und zum Schließen eines Kreises über die Leistungsquelle, wenn die Pfostenglieder (52) relativ zur Stütze (38) gleiten.

2. Hupentasteranordnung nach Anspruch 1, bei der die Stütze (38) vieleckig ist mit den mit Abstand versehenen Durchbrüchen (46) an den jeweiligen Ecken.

3. Hupentasteranordnung nach Anspruch 1 oder 2, bei der das Kontaktglied (62) und sein jeweiliges Pfostenglied (52) miteinander in Kontakt sind und das Isolationsmittel (54, 56) das Pfostenglied (52) gegen die Stütze (38) isoliert.

4. Hupentasteranordnung nach Anspruch 3, bei der die Kontaktglieder jedes Pfostenglied (52) umgebende Hülsenglieder (62) umfassen.

5. Hupentasteranordnung nach Anspruch 4 mit Befestigungsmitteln (60, 66), die ein Ende jedes Hülsengliedes (62) an einem jeweiligen Pfostenglied (52) befestigen.

6. Hupentasteranordnung nach einem der Ansprüche 1 bis 5, bei der jedes Pfostenglied (52) einen Kopf besitzt und der Kopf als das Bewegungs-Begrenzungsmittel wirkt.

7. Hupentasteranordnung nach Anspruch 6, bei der der Kopf jedes Pfostengliedes (52) sich mit entsprechenden Öffnungen (92) durch den Nabenabschnitt (14) ausrichtet.

## Revendications

1. Dispositif (36) d'interrupteur d'actionnement d'avertisseur disposé dans un volant (10) de direction d'un véhicule comprenant un moyeu (14) et une partie périphérique (12) et un module gonflable (74) de retenue d'occupant, un module d'interrupteur comprenant un support (38) fixé au moyeu (14) du volant de direction (10), le support comprenant plusieurs ouvertures espacées (46) qui le traversent, une colonnette (52) montée coulissante dans chaque ouverture (46) du support (38), des moyens de fixation (58, 88) fixant le module gonflable (74) de retenue d'occupant sur les colonnettes (52) afin de se déplacer avec celles-ci comme un ensemble par rapport au support (38), des moyens élastiques (72) agissant entre le support (38) et le module gonflable (74) pour solliciter ce dernier en l'éloignant du support (38), des moyens limitant le déplacement du module gonflable (74) en s'éloignant du support (38) pour positionner le module gonflable (74) à une distance prédéterminée du support (38) sous la sollicitation des moyens élastiques (72), ce dispositif d'interrupteur d'actionnement d'avertisseur étant caractérisé en ce qu'il comprend un organe de contact (62) pour chaque colonnette (52), s'étendant à partir du module gonflable (74) vers le support (38) sur une distance inférieure à la distance prédéterminée, des moyens isolants (54, 56) isolant les organes de contact (62) du support (38), et une source d'énergie reliée aux organes de contact (62) et au support (38), une pression manuelle appliquée sur le module gonflable (74) par l'occupant avec une force suffisante pour surmonter la sollicitation des moyens élastiques (72) déplaçant le module gonflable (74) vers le support (38) pour mettre en contact les organes de contact (62) avec le support (38) et fermer un circuit comprenant la source d'énergie lorsque les colonnettes (52) coulissent par rapport au support (38).

2. Dispositif suivant la revendication 1, dans lequel le support (38) comporte plusieurs angles, avec les ouvertures espacées (46) prévues à chacun de ces angles.

3. Dispositif suivant la revendication 1 ou 2, dans lequel l'organe de contact (62) et sa colonnette respective (52) sont en contact l'un avec l'autre, les moyens élastiques (54, 56) isolant la colonnette (52) du support (38).

4. Dispositif suivant la revendication 3, dans lequel les organes de contact sont constitués par des manchons (62) qui entourent chaque colonnette (52).

5. Dispositif suivant la revendication 4, comprenant des moyens de fixation (60, 66) fixant une extrémité de chaque manchon (62) à une colonnette respective (52).

6. Dispositif suivant l'une quelconque des revendications 1 à 5, dans lequel chaque colonnette (52) comporte une tête, cette tête agissant comme moyen de limitation de déplacement.

7. Dispositif suivant la revendication 6, dans lequel la tête de chaque colonnette (52) est alignée avec des ouvertures correspondantes (92) à travers le moyeu (14).

Fig.1

Fig.2

Fig.3

Fig.4

*Fig.5*

*Fig.6*